# EUROPÄISCHE PATENTSCHRIFT

(11) **EP 4 479 657 B1**
(45) Veröffentlichungstag und Bekanntmachung des Hinweises auf die Patenterteilung: **03.12.2025**
(21) Anmeldenummer: 23702358.5
(22) Anmeldetag: 02.02.2023
(51) Int. Cl.: F16D 3/18

(54) **KUPPLUNG FÜR SCHIENENFAHRZEUGE**
COUPLING FOR RAIL VEHICLES
ATTELAGE POUR VÉHICULES FERROVIAIRES

(30) Priorität: 14.02.2022 EP 22156494
(43) Veröffentlichungstag der Anmeldung: 25.12.2024
(73) Patentinhaber: Flender GmbH, 46395 Bocholt (DE)
(72) Erfinder: JANSEN, Andre, 46395 Bocholt (DE)
(74) Vertreter: Michalski Hüttermann & Partner Patentanwälte mbB
(86) Internationale Anmeldenummer: PCT/EP2023/052519
(87) Internationale Veröffentlichungsnummer: WO 2023/152013

(56) Entgegenhaltungen:
- WO-A1-2019/016072
- DE-A1- 102014 204 590
- US-A- 3 402 572

## Beschreibung

Die Erfindung betrifft eine Kupplung zur Verbindung zwischen einer ersten Welle und einer zweiten Welle, mit einem ersten Kupplungsteil zum Verbinden mit der ersten Welle, einem zur Übertragung eines Antriebsmoment mit dem ersten Kupplungsteil verbundenen zweiten Kupplungsteil zum Verbinden mit der zweiten Welle.

Regelmäßig ist es in bahntechnischen Anwendungen gefordert, dass drehmomentübertragende Kupplungen in Antriebssträngen elektrisch isolierende Eigenschaften aufweisen. Außerdem können die Kupplungen mit einem Rutschelement versehen sein, über das eine Drehmomentüberlast verhindert werden kann, indem das Rutschelement als Drehmomentbegrenzung wirkt. Als Kupplungen könnten beispielsweise Zahnkupplungen oder Membrankupplungen zum Einsatz kommen. Die DE 10 2014 204 590 A1 zeigt eine Zahnkupplung. Die WO 2019 0160 72 A1 zeigt eine Kupplung mit einer elektrisch isolierenden Buchse, die über einen form-, kraft- und stoffschlüssigen Kontakt, bspw. über eine Rändelung, zwischen dem radial inneren und äußeren Nabenteil einsitzt. Eine Drehmomentbegrenzung über die Buchse ist nicht vorgesehen. Auch die US 3 402 572 A zeigt eine elektrisch isolierende Kupplung. Es besteht ein ständiges Bedürfnis Kupplungen hinsichtlich ihres Aufbaus und ihrer Funktion zu verbessern und zu vereinfachen.

Es ist die Aufgabe der Erfindung Maßnahmen aufzuzeigen, die einen verbesserten und vereinfachten Aufbau einer Kupplung ermöglichen.

Die Lösung der Aufgabe erfolgt durch eine Kupplung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Kupplung zur Verbindung zwischen einer ersten Welle und einer zweiten Welle, mit einem ersten Kupplungsteil zum Verbinden mit der ersten Welle, einem zur Übertragung eines Antriebsmoment mit dem ersten Kupplungsteil verbundenen zweiten Kupplungsteil zum Verbinden mit der zweiten Welle und wobei in einem axialen Nabenabschnitt zumindest einer der beiden Kupplungsteile eine aus einem elektrisch nicht leitfähigen Hochleistungskunststoff bestehende Buchse in einer Durchgangsbohrung des Nabenabschnitts einsitzt, zum Aufnehmen der dem Kupplungsteil jeweils zugehörigen ersten oder zweiten Welle, wobei die Durchgangsbohrung innenumfänglich zumindest eine radiale Stufe ausbildet.

Die Kupplung ist eine drehstarre Kupplung, die über ineinander geführte Außenverzahnung und Innenverzahnung ein Drehmoment von einer ersten Welle auf eine zweite Welle übertragen kann. Bei den beiden Wellen kann es sich um eine Antriebswelle und eine Abtriebswelle handelt. Die Unterscheidung von Antrieb und Abtrieb bezieht sich auf die Richtung des Drehmomentflusses, wobei dieser nicht zwingend immer in einer Richtung verläuft, sondern sich in gewissen Betriebszuständen auch umdrehen kann.

Die Kupplungsteile können über einander zugewandte Verbindungsflansche mit einander verschraubt sein. Hierbei kann zwischen den beiden Anlagefläche der Verbindungsflansche eine fluidmäßige Abdichtung vorgesehen sein. Im Fall einer Zahnkupplung können beide Kupplungsteile im Wesentlichen aus einem Nabenabschnitt und einem Gehäuseteil zusammengesetzt sein, wobei zwischen Nabenabschnitt und Gehäuseteil die Mitnahmeverzahnung mit jeweils ineinander eingreifender Innenverzahnung und Außenverzahnung eine Drehmomentübertragung gewährleistet. Zwischen Nabenabschnitt und Gehäuseteil ist zweckmäßigerweise ein Volumen zur Aufnahme eines Schmiermittelvorrats vorgesehen. Über den Schmiermittelvorrat kann die Mitnahmeverzahnung geschmiert werden. Zur Abdichtung des Volumens gegenüber der Umgebung kann zwischen dem Nabenabschnitt und dem Gehäuseteil ein Dichtungselement vorgesehen sein. Hierbei ist insbesondere bevorzugt, wenn das Dichtungselement nicht nur in der Lage ist Axialbewegung zwischen dem Nabenabschnitt und dem Gehäuseteil mit auszuführen, sondern auch geringe Schwenkwinkel zwischen Nabenabschnitt und Gehäuseteil auszugleichen.

Der axiale Nabenabschnitt kann eine axiale Durchgangsbohrung ausbilden. Die Durchgangsbohrung kann endseitig im Inneren der Kupplung über ein Deckelelement abgedeckt sein. Die Durchgangsbohrung ist über ihre axiale Tiefe zumindest weitestgehend zylindrisch ausgeführt. In dem axialen Nabenabschnitt bzw. in der axialen Durchgangsbohrung sitzt die aus einem Hochleistungskunststoff bestehende Buchse ein. Die Buchse erstreckt sich bevorzugt vollständig über die axiale Tiefe der Durchgangsbohrung. Die Buchse kann radial von dem Deckelelement überdeckt werden. Die Durchgangsbohrung kann innenumfänglich stufenförmig ausgebildet ein, wobei ein axialer Eingangsbereich der Durchgangsbohrung einen größeren Durchmesser als der weitere axiale Verlauf der Durchgangsbohrung aufweist. Die Buchse ist mit ihrer außenumfänglichen Kontur zweckmäßigerweise der Stufenform der Durchgangsbohrung angepasst, d.h. die außenumfängliche Kontur der Buchse ist komplementär zu der Stufenform der Durchgangsbohrung.

Im Falle eine Membrankupplung sind beide Kupplungsteile strukturell betrachtet einfacher aufgebaut. Grundsätzlich kann zumindest das eine der beiden Kupplungsteile einteilig ausgeführt sein. Beide Kupplungsteile können über eine Flanschverschraubung gegeneinander drehfest verschraubt sein.

Die Buchse ist aus einem hochtemperaturbeständigen thermoplastischen Kunststoff hergestellt. Aufgrund seiner guten Temperaturbeständigkeit und seiner guten mechanischen Eigenschaften, insbesondere seiner guten Kriechfestigkeit, eignet sich dieser Werkstoff besonders gut für die Buchse. Ein weiterer Vorteil einer Buchse aus einem Hochleistungskunststoff besteht darin, dass bei Relativbewegungen zwischen der in der Nabenabschnitt und der einsitzenden Welle die Buchse als Verschleißteil geopfert wird und weder der Nabenabschnitt noch die Welle Schaden nimmt. Bei Erreichen einer vorgebbaren Verschleißgrenze ist es über eine reguläre Instandsetzung der Kupplung möglich, die Buchse auszutauschen. Die gute Temperaturbeständigkeit des Hochleistungskunststoffs ist insbesondere bei einer umfänglichen Relativdrehung im Fall einer Drehmomentbegrenzung zwischen Nabenabschnitt und einsitzender Welle von Vorteil. In diesem Fall der umfänglichen Relativdrehung treten nämlich umgehend infolge der Reibung hohe Temperaturen an der Buchse auf, die einen herkömmlichen Kunststoffwerkstoff relativ unmittelbar temperaturmäßig überlasten würden. Der Hochleistungskunststoff bietet folglich eine Temperaturbeständigkeit, wie sie bei herkömmlich eingesetzten Gleitlagermaterialien wie Kupfer, Bronze oder einem Gusswerkstoff zur Verfügung steht.

Die aus einem Hochleistungskunststoff bestehende Buchse vereint somit in vorteilhafterweise die beiden Funktionen der elektrischen Isolation zwischen den beiden Wellen, die über die Kupplung drehmomentübertragend verbunden sind, und der Drehmomentbegrenzung im Falle einer Überlast. Es ist vorgesehen, dass über die Wandstärke, d.h. die radiale Abmessung, der Buchse die elektrische Isolationsfähigkeit festgelegt bzw. an die Anforderungen angepasst werden kann. Zudem ist durch die bevorzugt innenumfängliche Stufenform des Nabenabschnitt und die komplementäre Kontur der Buchse sichergestellt, dass es zu keinem axialen Wandern des Nabenabschnitt im Falle einer umfänglichen Relativdrehung bei Drehmomentbegrenzung kommt.

In einer bevorzugten Ausgestaltung ist vorgesehen, dass der Hochleistungskunststoff aus einem Material der Gruppe der Hochleistungsthermoplaste oder der Technischen Thermoplaste besteht. Über den Einsatz dieser Materialien ist sichergestellt, dass die Buchse höchsten Belastungen Stand halten kann. In konkreter Ausgestaltung kann vorgesehen sein, dass es sich bei dem Hochleistungskunststoff um einen der Hochleistungsthermoplaste Polyetherketone (PEK), Polyphenylensulfid (PPS) oder Polyetheretherketon (PEEK) handelt. Bei Einsatz eines Technischen Thermoplast kann es sich um ein Polyamid (PA) oder ein Polyoxymethylen (POM) handeln.

In einer zudem bevorzugten Ausgestaltung ist vorgesehen, dass die Buchse in ihren axialen Endbereichen geometrisch derart ausgebildet ist, dass sich in den axialen Endbereichen in einer Betriebssituation eine verringerte Materialspannung einstellt. Durch eine solche Ausgestaltung lassen sich insbesondere die Spannungsspitzen vermeiden, die sich bei derartigen über einen Ölpressverband hergestellten Anordnungen regelmäßig einstellen. Die Endbereiche können derart gestaltet sein, dass sogenannte Endrücknahmen, d.h. Fasen am Außendurchmesser oder Innendurchmesser, und Radien in den Übergängen von Fasen zu zylindrischen Flächen ausgestaltet sind.

In einer besonders bevorzugten Ausgestaltung sind der axiale Nabenabschnitt auf einer Innenumfangsfläche und/oder die Buchse auf einer Außenumfangsfläche mit einem Gleitbeschichtung, insbesondere mit einem Gleitlack, beschichtet. Hierdurch wird der Verschleiß, der bei Relativbewegung zwischen der Buchse und der einsitzenden Welle während des Betriebs auftreten, deutlich reduziert und die Lebensdauer der Buchse erhöht. Zudem ermöglicht die Gleitbeschichtung gezielt die Gleitreibung einzustellen, die insbesondere in einem Überlastfall bei der Drehmomentbegrenzung zum Tragen kommt. In einer abgewandelten Ausgestaltung kann auch vorgesehen sein, dass der axiale Nabenabschnitt und die Buchse mit in ihrer Beschaffenheit unterschiedlichen Gleitbeschichtungen, insbesondere mit unterschiedlichen Gleitlacken, beschichtet sind. Hierdurch lassen sich das Verschleißverhalten und das Verhalten bei einer Gleitreibung weiter optimieren.

Aus fertigungsverfahrenstechnischer Sicht ist bevorzugt, dass die Buchse durch ein spritzgießtechnisches Verfahren in den axialen Nabenabschnitt eingebracht ist.

Die Aufgabenstellung wird zudem gelöst durch einen Antriebsstrang eines Schienenfahrzeugs, umfassend eine als Antriebswelle ausgebildete erste Welle, die über eine Kupplung mit einer als Abtriebswelle ausgebildeten zweiten Welle drehmomentübertragend gekoppelt ist, wobei die Kupplung wie beschrieben ausgebildet ist. Das Antriebsmittel kann beispielsweise als Elektromotor ausgeführt sein. Durch das Antriebsmittel wird über die Antriebswelle eine Antriebsleistung bereitgestellt, wobei die Antriebsleistung beispielweise im Fall einer bahntechnischen Anwendung von der Abtriebswelle auf einen Radsatz in einem Drehgestell eines Schienenfahrzeugs übertragen werden kann. Unter einem Schienenfahrzeug ist dabei jegliches motorisierte Fahrzeug zu einer Fortbewegung mittels eines Rad-Schiene-Systems zu verstehen. Das Schienenfahrzeug kann beispielsweise als Lokomotive, Triebwagen, Triebzug, U-Bahn, S-Bahn oder Straßenbahn ausgebildet sein. Der Betrieb derartiger Schienenfahrzeuge wird durch Verwendung einer Kupplung wie beschrieben in einem Antriebsstrang effizienter, da durch die erhöhte Wartungsfreundlichkeit Ausfallzeiten reduziert werden.

Die Aufgabenstellung wird auch gelöst durch eine Industrieapplikation, umfassend eine Antriebseinheit, die mit einer Abtriebseinheit über eine Kupplung drehmomentübertragend verbunden ist, wobei die Kupplung wie beschrieben ausgebildet ist.

Offenbart ist zudem eine Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen sämtlicher in einer Kupplung wie beschrieben vorgesehenen Bestandteile, wobei die Datenpakete dazu hergerichtet sind bei einer Verarbeitung durch eine Datenverarbeitungseinrichtung eine additive Herstellung der Bestandteile der Kupplung, insbesondere durch 3D-Druck mittels eines 3D-Druckers, und/oder eine Simulation der Betriebsverhaltens der Kupplung durchzuführen. Unter Betriebsverhalten ist beispielweise ein Biegeverhalten, ein Überlastverhalten oder ein Verschleißverhalten der Kupplung oder einzelner Komponenten zu verstehen. Auch eine Kinematik und/oder eine Schwingungscharakteristik der Kupplung können simuliert werden. Das Betriebsverhalten der Kupplung ist dadurch in einem montierten Zustand in einem Schienenfahrzeug simulierbar. Dies kann sowohl einen Fahrbetrieb als auch einen Wartungsbetrieb umfassen. Die Datenagglomeration ermöglicht eine kostengünstige Herstellung von Prototypen und/oder computerbasierten Simulationen, um die Funktionsweise der Kupplung zu studieren, Probleme im konkreten Anwendungsfall zu identifizieren und Verbesserungen zu finden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Die Figuren sind insoweit in gegenseitiger Ergänzung zu lesen, dass gleiche Bezugszeichen in unterschiedlichen Figuren die gleiche technische Bedeutung haben. Die in den Figuren gezeigten Ausführungsformen sind mit den oben skizzierten Merkmalen kombinierbar. Es zeigen:
Fig. 1: einen Querschnitt einer Zahnkupplung,
Fig. 2: schematische Darstellungen von Materialspannungen einer herkömmlichen Nabengestaltung und einer Nabengestaltung mit einer Buchse aus Hochleistungskunststoff,
Fig. 3: einen Querschnitt einer Membrankupplung,
Fig. 4: eine schematische Darstellung eines Schienenfahrzeugs mit einer Kupplung und
Fig. 5: eine schematische Darstellung einer Industrieapplikation mit einer Kupplung.

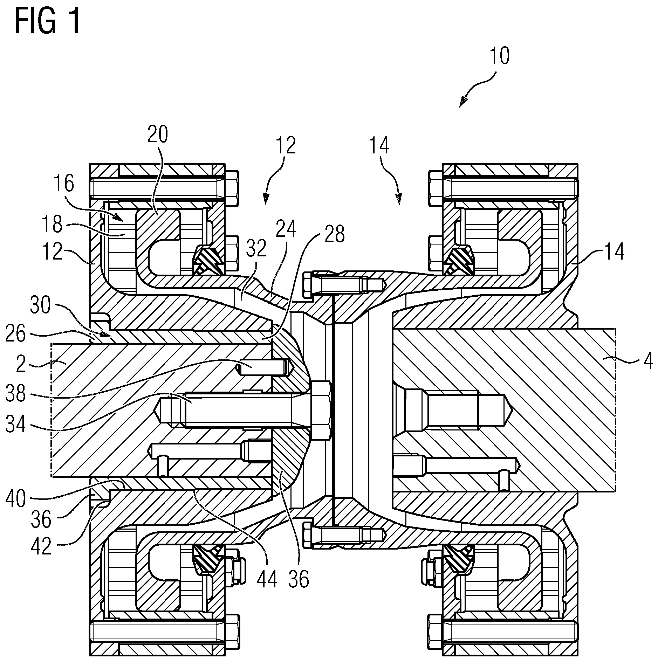

Die Figur 1 zeigt einen Querschnitt einer Kupplung, die vorliegend als Zahnkupplung 10 ausgeführt ist und die nachfolgend exemplarisch beschrieben wird. Die Zahnkupplung kann eine drehmomentübertragende Verbindung zwischen einer schematisch angedeuteten ersten Welle 2 und einer schematisch angedeuteten zweiten Welle 4 bilden. Bei der ersten Welle 2 kann es sich beispielsweise um eine Antriebswelle handeln, die antriebsmäßig mit nicht dargestellten Antriebsmitteln verbunden sein kann. Bei der zweiten Welle 4 kann es sich um eine Abtriebswelle handeln, die antriebsmäßig beispielsweise mit einem nicht dargestellten Radsatz eines Schienenfahrzeugs verbunden sein kann.

Die Zahnkupplung 10 ist strukturell aus einem ersten Kupplungsteil 12 und einem zweiten Kupplungsteil 14 zusammengesetzt. Beide Kupplungsteile 12, 14 sind vorliegend über jeweilige Anlageflansche gegeneinander verschraubt. Beide Kupplungsteile 12, 14 sind im Wesentlichen einander entsprechend aufgebaut, abgesehen von der im weiteren Verlauf noch zu beschreibenden Buchse 30, die aus einem Hochleistungskunststoff besteht. Aufgrund des im Wesentlichen sich entsprechenden Aufbaus wird im Folgenden lediglich auf das erste Kupplungsteil 12 Bezug genommen und dessen Aufbau detaillierter beschrieben.

Das Kupplungsteil 12 ist aus einem Nabenabschnitt 22 und einem Gehäuseteil 24 zusammengesetzt. Zur Übertragung eines Antriebsmoment weist das Kupplungsteile 12 eine Mitnahmeverzahnung 16 auf, wobei hierzu der Nabenabschnitt 22 eine Innenverzahnung ausbildet, die in eine Außenverzahnung 20 des Gehäuseteils 24 eingreift. Über die Mitnahmeverzahnung 16 kann die Zahnkupplung 10 während eines Betriebs axiale und winklige Lageveränderungen der beiden Wellen 2, 4 aufnehmen und ausgleichen. Das Kupplungsteil 12 und der Nabenabschnitt 22 bilden ein Innenvolumen 32 zur Aufnahme eines Schmiermittelvorrates aus. Die Mitnahmeverzahnung 16 liegt innerhalb des Innenvolumens 32. Benachbart zu der Mitnahmeverzahnung 16 ist das Innenvolumen 16 über eine Dichtungsanordnung 34 zur Umgebung hin abgedichtet.

In dem axialen Nabenabschnitt 22 des ersten Kupplungsteils 12 sitzt in einer Durchgangsbohrung 40 eine aus einem elektrisch nicht leitfähigen Hochleistungskunststoff bestehende Buchse 30 ein. Der axiale Nabenabschnitt 22 ist somit über die Buchse 30 auf der ersten Welle 2 angeordnet und ein von der ersten Welle 2 geliefertes Drehmoment kann auf den Nabenabschnitt 22 und damit auf die gesamte Zahnkupplung 10 übertragen werden. Zur Axialsicherung des axialen Nabenabschnitt 22 und der Buchse 30 ist ein mit einer Schraube 34 sicherbares Deckelelement 36 vorgesehen, welches endseitig an der ersten Welle 2 angeordnet ist. Das Deckelelement 36 beaufschlagt sowohl den axialen Nabenabschnitt 22 als auch die Buchse 30 stirnseitig. Um eine Drehung des Deckelelements 36 zu unterbinden, sitzt ein Sicherungsstift 38 in einer Bohrung des Deckelelements 36 und in einer axial fluchtenden Bohrung auf der Stirnseite der ersten Welle 2 ein.

Die Buchse 30 besteht aus einem Hochleistungskunststoff, wobei es sich bei dem verwendeten um ein Hochleistungsthermoplast oder ein Technischer Thermoplast handeln kann. Alternativ kann es sich bei dem Material um ein Technisches Thermoplast oder um Polyoxymethylen handeln. Die Buchse 30 ist in ihren axialen Endbereichen 26, 28 geometrisch derart ausgebildet, dass sich in den axialen Endbereichen 26, 28 in einer Betriebssituation eine verringerte Materialspannung einstellt. Hierzu kann die Durchgangsbohrung 40 des Nabenabschnitts 22 innenumfänglich in axialer Richtung stufenförmig ausgeführt sein. Hierbei kann in axialer Richtung eine ersten den Innendurchmesser radial verengende Stufe 42 und eine zweite den Innendurchmesser radial verengende Stufe 44 vorgesehen sein. Es kann vorgesehen sein, dass der axiale Nabenabschnitt 22 auf einer Innenumfangsfläche und/oder die Buchse 30 auf einer Außenumfangsfläche mit einem Gleitbeschichtung, insbesondere mit einem Gleitlack, beschichtet sind.

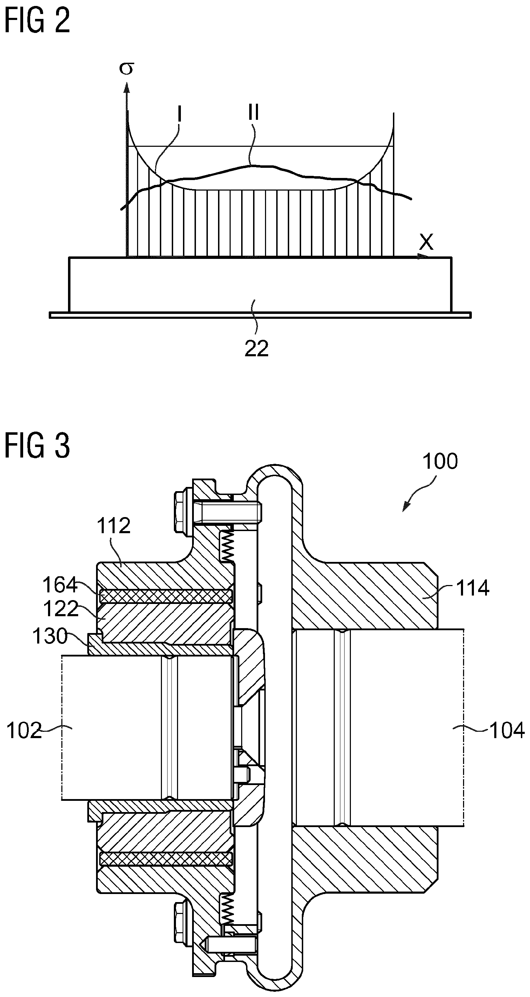

Die Figur 2 zeigt rein schematisch die Materialspannung im Axialverlauf für
I. eine herkömmliche Nabengestaltung, bei der die Welle über einen Ölpressverband in dem Nabenabschnitt 22 gehalten ist und
II. eine Nabengestaltung mit einer Buchse 30 aus einem elektrisch nicht leitfähigen Hochleistungskunststoff, die in dem Nabenabschnitt 22 wie beschrieben einsitzt.

In der Figur 3 ist ebenfalls exemplarisch eine Kupplung gezeigt, die als Membrankupplung 100 ausgeführt ist. Die Bezugszeichen sind gegenüber der Figur 1 um 100 hochgesetzt. Mit dem Bezugszeichen 164 ist eine isolierende Kunststoffhülse aus einem GFK-Material bezeichnet. Im Übrigen wird bzgl. der Gemeinsamkeiten auf die Beschreibung zu der Kupplung 10 in Figur 1 verwiesen.

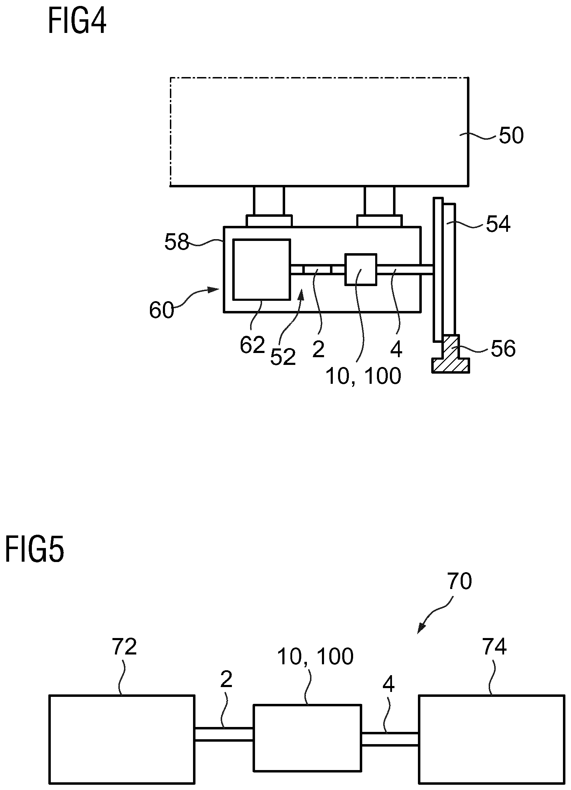

In Figur 4 ist schematisch der Aufbau eines beanspruchten Antriebsstrangs 52 eines Schienenfahrzeugs 50 dargestellt. Das Schienenfahrzeug 50 fährt über ein Rad 54 auf einer Schiene 56. Das Schienenfahrzeug 50 umfasst einen Wagenkasten 58, an dem ein Drehgestell 60 befestigt ist. Das Drehgestell 60 umfasst als Antriebsmittel einen Fahrmotor 62, der mit einer als Antriebswelle ausgebildete ersten Welle 2 antriebsmäßig gekoppelt ist. Die Antriebswelle 2 ist über ein Kupplung 10, 100 mit einer als Abtriebswelle ausgebildeten zweiten Welle 4 gekoppelt, die ihrerseits mit dem Rad 54 gekoppelt ist, um das Rad 54 zur Fortbewegung des Schienenfahrzeugs 50 auf der Schiene 56 anzutreiben. Die Kupplung 10, 100 ist hierbei wie zuvor beschrieben ausgebildet und/oder weitergebildet.

Die Figur 5 zeigt einen schematischen Aufbau einer Ausführungsform der beanspruchten Industrie-Applikation 70, die eine Antriebseinheit 72 umfasst, die als Elektromotor, Verbrennungsmotor oder Hydraulikmotor ausgebildet sein kann. Durch die Antriebseinheit 72 wird über eine Antriebswelle 2 eine Antriebsleistung bereitgestellt, die über eine Kupplung 10, 100 und eine Abtriebswelle 4 zu einer Abtriebseinheit 74 übertragen werden kann. Die Kupplung 10, 100 ist hierbei wie zuvor beschrieben ausgebildet und/oder weitergebildet.

### Bezugszeichenliste

- 2: Welle
- 4: Welle
- 10: Kupplung
- 12: Kupplungsteil
- 14: Kupplungsteil
- 16: Mitnahmeverzahnung
- 18: Innenverzahnung
- 20: Außenverzahnung
- 22: Nabenabschnitt
- 24: Gehäuseteil
- 26: Endbereich
- 28: Endbereich
- 30: Buchse
- 32: Innenvolumen
- 34: Schraube
- 36: Deckelelement
- 38: Sicherungsstift
- 40: Durchgangsbohrung
- 42: Stufe
- 44: Stufe
- 46: Öffnung
- 48: Freiraum
- 50: Schienenfahrzeug
- 52: Antriebsstrang
- 54: Rad
- 56: Schiene
- 58: Wagenkasten
- 60: Drehgestell
- 62: Fahrmotor
- 70: Industrieapplikation
- 72: Antriebseinheit
- 74: Abtriebseinheit

## Patentansprüche

1. Kupplung (10, 100) zur Verbindung zwischen einer ersten Welle (2) und einer zweiten Welle (4), mit
einem ersten Kupplungsteil (12) zum Verbinden mit der ersten Welle (2),
einem zur Übertragung eines Antriebsmoment mit dem ersten Kupplungsteil (12) verbundenen zweiten Kupplungsteil (14) zum Verbinden mit der zweiten Welle (4), wobei in einem axialen Nabenabschnitt (22) zumindest einer der beiden Kupplungsteile (12, 14) eine aus einem elektrisch nicht leitfähigen Hochleistungskunststoff bestehende Buchse (30) in einer Durchgangsbohrung (40) des Nabenabschnitts (22) einsitzt, zum Aufnehmen der dem Kupplungsteil (12, 14) jeweils zugehörigen ersten oder zweiten Welle (2, 4), wobei die Durchgangsbohrung (40) innenumfänglich zumindest eine radiale Stufe (44) ausbildet.

2. Kupplung (10) nach Anspruch 1, **dadurch gekennzeichnet, dass** zumindest eines der beiden Kupplungsteile (12, 14) eine Mitnahmeverzahnung (16) mit jeweils ineinander eingreifender Innenverzahnung (18) und Außenverzahnung (20) aufweist.

3. Kupplung (10, 100) nach Anspruch 1 oder 2, **dadurch gekennzeichnet, dass** der Hochleistungskunststoff aus einem Material der Gruppe der Hochleistungsthermoplaste oder der Technischen Thermoplaste besteht.

4. Kupplung (10, 100) nach Anspruch 3, **dadurch gekennzeichnet, dass** es sich bei dem Hochleistungskunststoff um einen der Hochleistungsthermoplaste Polyetherketone (PEK), Polyphenylensulfid (PPS) oder Polyetheretherketon (PEEK) handelt.

5. Kupplung (10, 100) nach Anspruch 3, **dadurch gekennzeichnet, dass** es sich bei dem Hochleistungskunststoff um einen der Technischen Thermoplaste Polyamid (PA) oder Polyoxymethylen (POM) handelt.

6. Kupplung (10, 100) nach einem der Ansprüche 1 bis 5, **dadurch gekennzeichnet, dass** die Buchse (30) in ihren axialen Endbereichen (26, 28) geometrisch derart ausgebildet ist, dass sich in den axialen Endbereichen (26, 28) in einer Betriebssituation eine verringerte Materialspannung einstellt.

7. Kupplung (10, 100) nach einem der Ansprüche 1 bis 6, **dadurch gekennzeichnet, dass** der axiale Nabenabschnitt (22) auf einer Innenumfangsfläche und/oder die Buchse (30) auf einer Außenumfangsfläche mit einem Gleitbeschichtung, insbesondere mit einem Gleitlack, beschichtet sind.

8. Kupplung (10, 100) nach Anspruch 7, **dadurch gekennzeichnet, dass** der axiale Nabenabschnitt und die Buchse (30) mit in ihrer Beschaffenheit unterschiedlichen Gleitbeschichtungen, insbesondere mit unterschiedlichen Gleitlacken, beschichtet sind.

9. Kupplung (10, 100) nach einem der Ansprüche 1 bis 8, **dadurch gekennzeichnet, dass** die Buchse (30) durch ein spritzgießtechnisches Verfahren in den axialen Nabenabschnitt (22) eingebracht ist.

10. Kupplung (10, 100) nach einem der Ansprüche 1 bis 9, **dadurch gekennzeichnet, dass** die zumindest eine radiale Stufe (44) die Durchgangsbohrung (40) zwischen einem ersten Durchmesser und einem zweiten Durchmesser vermittelt.

11. Kupplung (10, 100) nach einem der Ansprüche 1 bis 10, **dadurch gekennzeichnet, dass** eine erste Stufe (44) und eine zweite Stufe (42) vorgesehen ist.

12. Kupplung (10, 100) nach Anspruch 11, **dadurch gekennzeichnet, dass** zwischen einer Öffnung (46) der Durchgangsbohrung (40) und der zweiten Stufe (42) ein umfänglicher Freiraum (48) zwischen der Buchse (30) und eines Innenumfangs der Durchgangsbohrung (40) angeordnet ist.

13. Antriebsstrang (52) eines Schienenfahrzeugs (50), umfassend eine als Antriebswelle ausgebildete erste Welle (2), die über eine Kupplung mit einer als Abtriebswelle ausgebildeten zweiten Welle (4) drehmomentübertragend gekoppelt ist, **dadurch gekennzeichnet, dass** die Kupplung (10, 100) nach einem der Ansprüche 1 bis 9 ausgebildet ist.

14. Industrieapplikation (70), umfassend eine Antriebseinheit (72), die mit einer Abtriebseinheit (74) über eine Kupplung drehmomentübertragend verbunden ist, **dadurch gekennzeichnet, dass** die Kupplung (10, 100) nach einem der Ansprüche 1 bis 9 ausgebildet ist.

## Claims

1. Coupling (10, 100) for connection between a first shaft (2) and a second shaft (4), having
a first coupling portion (12) for connection to the first shaft (2),
a second coupling portion (14) which is connected to the first coupling portion (12) for transmitting a drive torque for connection to the second shaft (4),
wherein there is located in an axial hub portion (22) of at least one of the two coupling portions (12, 14) a bush (30) which comprises an electrically non-conductive high-performance plastics material in a through-hole (40) of the hub portion (22) for receiving the first or second shaft (2, 4) which is associated with the coupling portion (12, 14), wherein the through-hole (40) forms at least one radial step (44) at the internal circumference.

2. Coupling (10) according to Claim 1, **characterized in that** at least one of the two coupling portions (12, 14) has a carrier toothing (16) having an internal toothing (18) and external toothing (20) which engage one in the other in each case.

3. Coupling (10, 100) according to Claim 1 or 2, **characterized in that** the high-performance plastics material comprises a material of the group of high-performance thermoplasts or technical thermoplasts.

4. Coupling (10, 100) according to Claim 3, **characterized in that** the high-performance plastics material is one of the high-performance thermoplasts polyether-ketone (PEK), polyphenylene sulfide (PPS) or polyether-etherketone (PEEK).

5. Coupling (10, 100) according to Claim 3, **characterized in that** the high-performance plastics material is one of the technical thermoplasts polyamide (PA) or polyoxymethylene (POM).

6. Coupling (10, 100) according to one of Claims 1 to 5, **characterized in that** the bush (30) is geometrically configured in the axial end regions (26, 28) thereof in such a manner that a reduced material stress is produced in the axial end regions (26, 28) in an operating situation.

7. Coupling (10, 100) according to one of Claims 1 to 6, **characterized in that** the axial hub portion (22) on an internal circumferential face and/or the bush (30) on an external circumferential face is/are coated with a sliding coating, in particular with an anti-friction lacquer.

8. Coupling (10, 100) according to Claim 7, **characterized in that** the axial hub portion and the bush (30) are coated with sliding coatings which are different in terms of their quality, in particular with different anti-friction lacquers.

9. Coupling (10, 100) according to one of Claims 1 to 8, **characterized in that** the bush (30) is introduced into the axial hub portion (22) by means of a technical injection-moulding method.

10. Coupling (10, 100) according to one of Claims 1 to 9, **characterized in that** the at least one radial step (44) transmits the through-hole (40) between a first diameter and a second diameter.

11. Coupling (10, 100) according to one of Claims 1 to 10, **characterized in that** a first step (44) and a second step (42) are provided.

12. Coupling (10, 100) according to Claim 11, **characterized in that** a circumferential empty space (48) is arranged between an opening (46) of the through-hole (40) and the second step (42) between the bush (30) and an internal circumference of the through-hole (40).

13. Drive train (52) of a rail vehicle (50) comprising a first shaft (2) which is in the form of a drive shaft and which is coupled via a coupling in a torque-transmitting manner to a second shaft (4) which is in the form of an output shaft, **characterized in that** the coupling (10, 100) is configured according to one of Claims 1 to 9.

14. Industrial application (70) comprising a drive unit (72) which is connected to an output unit (74) via a coupling in a torque-transmitting manner, **characterized in that** the coupling (10, 100) is configured according to one of Claims 1 to 9.

## Revendications

1. Accouplement (10, 100) pour la liaison entre un premier arbre (2) et un deuxième arbre (4), comprenant une première partie d'accouplement (12) destinée à être reliée au premier arbre (2),
une deuxième partie d'accouplement (14) reliée à la première partie d'accouplement (12) pour la transmission d'un couple d'entraînement, destinée à être reliée au deuxième arbre (4),
où, dans une section de moyeu axiale (22) d'au moins l'une des deux parties d'accouplement (12, 14), une douille (30) en une matière plastique haute performance électriquement non conductrice repose dans un alésage traversant (40) de la section de moyeu (22), afin de recevoir le premier ou le deuxième arbre (2, 4) associé respectivement à la partie d'accouplement (12, 14), où le trou traversant (40) réalise sur la périphérie intérieure au moins un gradin radial (44).

2. Accouplement (10) selon la revendication 1, **caractérisé en ce qu'**au moins l'une des deux parties d'accouplement (12, 14) présente une denture d'entraînement (16) avec une denture intérieure (18) et une denture extérieure (20) s'engrenant l'une dans l'autre.

3. Accouplement (10, 100) selon la revendication 1 ou 2, **caractérisé en ce que** la matière plastique haute performance est constituée d'un matériau du groupe des thermoplastiques haute performance ou des thermoplastiques techniques.

4. Accouplement (10, 100) selon la revendication 3, **caractérisé en ce que** la matière plastique haute performance consiste en l'un des thermoplastiques haute performance polyéthercétones (PEK), polysulfure de phénylène (PPS) ou polyétheréthercétone (PEEK).

5. Accouplement (10, 100) selon la revendication 3, **caractérisé en ce que** la matière plastique haute performance consiste en l'un des thermoplastiques techniques polyamide (PA) ou polyoxyméthylène (POM).

6. Accouplement (10, 100) selon l'une quelconque des revendications 1 à 5, **caractérisé en ce que** la douille (30) est réalisée géométriquement dans ses zones d'extrémité axiales (26, 28) de telle sorte qu'une tension de matériau réduite s'établit dans les zones d'extrémité axiales (26, 28) dans une situation de fonctionnement.

7. Accouplement (10, 100) selon l'une quelconque des revendications 1 à 6, **caractérisé en ce que** la section de moyeu axiale (22) sur une surface périphérique intérieure et/ou la douille (30) sur une surface périphérique extérieure sont recouvertes d'un revêtement glissant, notamment d'un vernis glissant.

8. Accouplement (10, 100) selon la revendication 7, **caractérisé en ce que** la section de moyeu axiale et la douille (30) sont recouvertes de revêtements glissants de nature différente, notamment de vernis glissants différents.

9. Accouplement (10, 100) selon l'une quelconque des revendications 1 à 8, **caractérisé en ce que** la douille (30) est insérée dans la section de moyeu axiale (22) par un procédé de moulage par injection.

10. Accouplement (10, 100) selon l'une quelconque des revendications 1 à 9, **caractérisé en ce que** l'au moins un gradin radial (44) assure la transition de l'alésage traversant (40) entre un premier diamètre et un deuxième diamètre.

11. Accouplement (10, 100) selon l'une quelconque des revendications 1 à 10, **caractérisé en ce qu'**un premier gradin (44) et un deuxième gradin (42) sont prévus.

12. Accouplement (10, 100) selon la revendication 11, **caractérisé en ce qu'**un espace libre périphérique (48) est agencé entre une ouverture (46) de l'alésage traversant (40) et le deuxième gradin (42) entre la douille (30) et une périphérie intérieure de l'alésage traversant (40).

13. Chaîne cinématique (52) d'un véhicule ferroviaire (50), comprenant un premier arbre (2) réalisé sous forme d'arbre d'entraînement, qui est couplé en transmettant le couple par l'intermédiaire d'un accouplement à un deuxième arbre (4) réalisé sous forme d'arbre de sortie, **caractérisée en ce que** l'accouplement (10, 100) est réalisé selon l'une quelconque des revendications 1 à 9.

14. Application industrielle (70), comprenant une unité d'entraînement (72) qui est reliée en transmettant le couple par l'intermédiaire d'un accouplement à une unité de sortie (74), **caractérisée en ce que** l'accouplement (10, 100) est réalisé selon l'une quelconque des revendications 1 à 9.
